# EUROPEAN PATENT APPLICATION

(11) **EP 4 109 616 A1**
(43) Date of publication of application: **28.12.2022**
(21) Application number: 20919753.2
(22) Date of filing: 19.10.2020
(51) Int. Cl.: H01M 10/052, H01M 10/0566, H01M 10/0585, H01M 50/10, H01M 50/543

(54) **LITHIUM ION SECONDARY BATTERY**

(30) Priority: 20.02.2020 JP 2020027016
(71) Applicant: NGK Insulators, Ltd., Nagoya city, Aichi 467-8530 (JP)
(72) Inventor: OTSUKA, Haruo, Nagoya-city, Aichi 467-8530 (JP)
(74) Representative: Müller-Boré & Partner Patentanwälte PartG mbB
(86) International application number: PCT/JP2020/039247
(87) International publication number: WO 2021/166322

(57) **Abstract**

A lithium ion secondary battery 1 includes a pair of exterior films (10) having outer edges (11, 12, 13, 14) bonded together in a stacked state to form an internal space (10C), a battery body (20) housed in the internal surface (10C), a positive electrode tab terminal (31) connected to the battery body (20) in between the pair of exterior films (10) and extending to an outside, and a negative electrode tab terminal (32) connected to the battery body (20) in between the pair of exterior films (10) and extending to the outside. The pair of exterior films (10) each include a first resin layer (105) constituting an inner surface (10A), the inner surfaces opposing each other. The inner surface (10A) of at least one of the pair of exterior films (10) has a plurality of projections (109) arranged thereon apart from each other.

## Description

### Technical Field

The present disclosure relates to a lithium ion secondary battery.

The present application claims priority based on Japanese Patent Application No. 2020-027016 filed on February 20, 2020, the entire contents of which are incorporated herein by reference.

### Background Art

A lithium ion secondary battery that includes a pair of exterior films having outer edges bonded together in a stacked state to form an internal space and a battery body housed in the internal space is known (see, for example, Japanese Patent Application Laid-Open No. 2006-164868 (Patent Literature 1)). Patent Literature 1 proposes, among others, that when the pair of exterior films are to be bonded to each other by thermal welding, a heater head used for the thermal welding is pressed avoiding the ends of the exterior films for the purposes including prevention of short-circuiting between the terminals, extending from the internal space to the outside, and the metal foils constituting the exterior films.

### Citation List

### Patent Literature

Patent Literature 1: Japanese Patent Application Laid-Open No. 2006-164868

### Summary of Invention

### Technical Problem

In the lithium ion secondary battery of the above structure, a secure bonding between the pair of exterior films is important from the standpoint of reliability of the battery. However, air bubbles may remain in between the regions of the exterior films that are to be bonded to each other, which can cause a problem of degraded reliability of the battery.

In view of the foregoing, one of the objects of the invention according to the present disclosure is to provide a lithium ion secondary battery improved in reliability by suppressing remaining of air bubbles in the exterior films.

### Solution to Problem

A lithium ion secondary battery according to the present disclosure includes: a pair of exterior films having outer edges bonded together in a stacked state to form an internal space; a battery body housed in the internal space; a positive electrode tab terminal connected to the battery body in between the pair of exterior films and extending to an outside; and a negative electrode tab terminal connected to the battery body in between the pair of exterior films and extending to the outside. The battery body includes a separator film, a lithium (Li)-containing positive electrode layer laminated on a first main surface of the separator film, a negative electrode layer laminated on a second main surface of the separator film located on an opposite side from the first main surface in a thickness direction, a positive electrode current collector foil laminated on an opposite side of the positive electrode layer from the separator film, a negative electrode current collector foil laminated on an opposite side of the negative electrode layer from the separator film, and an electrolytic solution impregnated into the separator film, the positive electrode layer, and the negative electrode layer. The pair of exterior films each include a first resin layer constituting an inner surface, the inner surfaces opposing each other. The inner surface of at least one of the pair of exterior films has a plurality of projections arranged thereon apart from each other.

### Advantageous Effects of Invention

According to the lithium ion secondary battery described above, a lithium ion secondary battery improved in reliability by suppressing remaining of air bubbles in the exterior films can be provided.

### Brief Description of Drawings

FIG. 1 is a schematic perspective view showing an appearance of a lithium ion secondary battery;
FIG. 2 is a schematic cross-sectional view showing the structure of the lithium ion secondary battery;
FIG. 3 is a schematic cross-sectional view showing the structure of the lithium ion secondary battery;
FIG. 4 is a schematic cross-sectional view showing the structure of an exterior film in Embodiment 1;
FIG. 5 is a schematic cross-sectional view showing the structure of the exterior film in Embodiment 2; and
FIG. 6 is a schematic cross-sectional view showing the structure of the exterior film in Embodiment 3.

### Description of Embodiments

### [Outline of Embodiments]

First, embodiments of the present disclosure will be described and listed. A lithium ion secondary battery of the present disclosure includes: a pair of exterior films having outer edges bonded together in a stacked state to form an internal space; a battery body housed in the internal space; a positive electrode tab terminal connected to the battery body in between the pair of exterior films and extending to an outside; and a negative electrode tab terminal connected to the battery body in between the pair of exterior films and extending to the outside. The battery body includes a separator film, a lithium (Li)-containing positive electrode layer laminated on a first main surface of the separator film, a negative electrode layer laminated on a second main surface of the separator film located on an opposite side from the first main surface in a thickness direction, a positive electrode current collector foil laminated on an opposite side of the positive electrode layer from the separator film, a negative electrode current collector foil laminated on an opposite side of the negative electrode layer from the separator film, and an electrolytic solution impregnated into the separator film, the positive electrode layer, and the negative electrode layer. The pair of exterior films each include a first resin layer constituting an inner surface, the inner surfaces opposing each other. The inner surface of at least one of the pair of exterior films has a plurality of projections arranged thereon apart from each other.

At least one of the pair of exterior films constituting the lithium ion secondary battery of the present disclosure has the inner surface on which a plurality of projections are arranged apart from each other. The plurality of projections secure a path for air to pass through when the pair of exterior films are bonded together. This suppresses remaining of air bubbles in between the regions of the pair of exterior films to be bonded together. As a result, a lithium ion secondary battery with improved reliability is obtained. As such, according to the lithium ion secondary battery of the present disclosure, reliability can be improved by suppressing remaining of air bubbles in the exterior films.

In the above lithium ion secondary battery, the plurality of projections may be arranged in a region adjacent to the positive electrode tab terminal and a region adjacent to the negative electrode tab terminal.

The positive electrode tab terminal and the negative electrode tab terminal extend from between the pair of exterior films to the outside. Therefore, of the region where the pair of exterior films are to be bonded to each other, in the regions adjacent to the positive electrode tab terminal and the negative electrode tab terminal, the exterior films need to be bonded together while following the shapes of the positive and negative electrode tab terminals. As a result, in the regions adjacent to the positive electrode tab terminal and the negative electrode tab terminal, the airtightness of the bonding between the exterior films may become low. In order to address this, there are cases, for example, that the width of the region where the pair of exterior films are to be bonded to each other (the length of that region in the longitudinal direction of the positive and negative electrode tab terminals) is increased as compared to the other regions. In such cases, the risk of remaining of air bubbles described above increases. In contrast, the plurality of projections described above being arranged in the regions adjacent to the positive electrode tab terminal and the negative electrode tab terminal can suppress the remaining of air bubbles even in such cases.

In the above lithium ion secondary battery, the first resin layer may include a first layer having a first melting point, and a second layer having a second melting point lower than the first melting point and constituting the inner surface.

Causing the surface of the second layer of a lower melting point to serve as the inner surface facilitates ensuring high airtightness when the bonding between the pair of exterior films is achieved by thermal bonding.

In the above lithium ion secondary battery, each of the pair of exterior films may further include a metal layer laminated on a main surface of the first resin layer opposite to the inner surface, and a second resin layer laminated on a main surface of the metal layer opposite to the first resin layer.

The above exterior film with the structure in which the metal layer is sandwiched between the pair of resin layers is suitable as an exterior film constituting the lithium ion secondary battery of the present disclosure.

### [Specific Embodiments]

Specific embodiments of the lithium ion secondary battery of the present disclosure will be described below with reference to the drawings. In the drawings referenced below, the same or corresponding parts are denoted by the same reference numerals and the descriptions thereof are not repeated.

### (Embodiment 1)

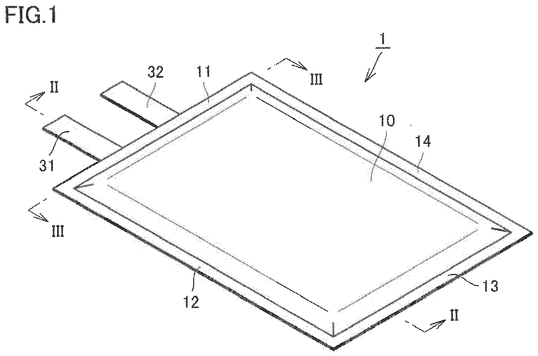

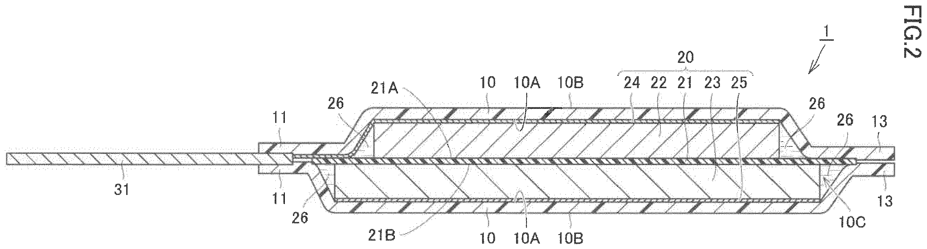

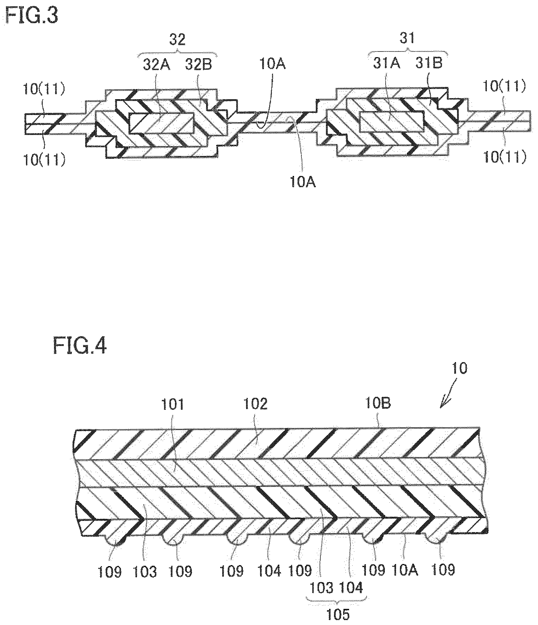

FIG. 1 is a schematic perspective view showing the appearance of a lithium ion secondary battery in the present embodiment. FIG. 2 is a schematic cross-sectional view showing a cross section along the line II-II in FIG. 1. FIG. 3 is a schematic cross-sectional view showing a cross section along the line III-III in FIG. 1.

Referring to FIGS. 1 to 3, the lithium ion secondary battery 1 in the present embodiment includes a pair of exterior films 10, a battery body 20, a positive electrode tab terminal 31, and a negative electrode tab terminal 32. The exterior films 10 have a same rectangular shape as viewed in the thickness direction. The pair of exterior films 10 have their first outer edges 11, corresponding to the first short side of the rectangle, second outer edges 12, corresponding to the first long side, third outer edges 13, corresponding to the second short side, and fourth outer edges 14, corresponding to the second long side, bonded to each other. Stated in more detail, the first outer edges 11 are bonded together over the entire area except for their portions opposing each other with the positive electrode tab terminal 31 and the negative electrode tab terminal 32 therebetween (see FIG. 3). The second outer edges 12, the third outer edges 13, and the fourth outer edges 14 are bonded together over the entire area in the circumferential direction. In the present embodiment, the outer edges 11 to 14 are fused for bonding. The bonding can be accomplished by thermal bonding. That is, in the pair of exterior films 10, the outer edges 11 to 14 are bonded (fused) together in a stacked state. Referring to FIG. 2, the pair of exterior films 10 each include an inner surface 10A, constituting surfaces opposing each other, and an outer surface 10B, which is a main surface opposite to the inner surface 10A. The opposing inner surfaces 10A of the pair of exterior films 10 form an internal space 10C therebetween.

Referring to FIG. 2, the battery body 20 is housed in the internal space 10C. The battery body 20 includes a separator film 21, a positive electrode layer 22, a negative electrode layer 23, a positive electrode current collector foil 24, a negative electrode current collector foil 25, and an electrolytic solution 26.

The separator film 21 is a resin film. For the resin constituting the separator film 21, for example, polyolefin, polyimide, polyester (e.g., polyethylene terephthalate (PET)), cellulose, or the like can be adopted.

The positive electrode layer 22 is laminated on a first main surface 21A as one of the main surfaces of the separator film 21. The positive electrode layer 22 in the present embodiment is a plate-shaped sintered body of lithium complex oxide. The positive electrode layer 22 does not contain a binder. The lithium complex oxide refers to an oxide expressed by LiₓMO₂ (where 0.05<x<1.10, M is at least one transition metal and typically includes one or more of cobalt (Co), nickel (Ni), and manganese (Mn)).

The negative electrode layer 23 is laminated on a second main surface 21B of the separator film 21 located on the opposite side from the first main surface 21A in the thickness direction. The negative electrode layer 23 contains carbon such as graphite as a negative electrode active material, and a binder such as styrene butadiene rubber (SBR), polyvinylidene fluoride (PVDF), or the like.

The positive electrode current collector foil 24 is laminated on an opposite side of the positive electrode layer 22 from the separator film 21. The positive electrode current collector foil 24 is a foil made of metal that is a conductive material. For the metal constituting the positive electrode current collector foil 24, aluminum (Al), for example, can be adopted. The positive electrode current collector foil 24 is disposed between the positive electrode layer 22 and the inner surface 10A of the exterior film 10. The positive electrode current collector foil 24 is disposed along the inner surface 10A of the exterior film 10.

The negative electrode current collector foil 25 is laminated on an opposite side of the negative electrode layer 23 from the separator film 21. The negative electrode current collector foil 25 is a foil made of metal that is a conductive material. For the metal constituting the negative electrode current collector foil 25, copper (Cu), Al, or the like, for example, can be adopted. The negative electrode current collector foil 25 is disposed between the negative electrode layer 23 and the inner surface 10A of the exterior film 10. The negative electrode current collector foil 25 is disposed along the inner surface 10A of the exterior film 10.

The electrolytic solution 26 is impregnated into the separator film 21, the positive electrode layer 22, and the negative electrode layer 23. For the electrolytic solution 26, a solution obtained by dissolving a lithium salt (e.g., LiPF₆) in an organic solvent (e.g., a mixed solvent of ethylene carbonate (EC) and methyl ethyl carbonate (MEC), a mixed solvent of ethylene carbonate (EC) and diethyl carbonate (DEC), or a mixed solvent of ethylene carbonate (EC) and ethyl methyl carbonate (EMC)) can be adopted.

The positive electrode tab terminal 31 is connected to the battery body 20 in between the pair of exterior films 10 and extends to the outside. The negative electrode tab terminal 32 is connected to the battery body 20 in between the pair of exterior films 10 and extends to the outside. The positive electrode tab terminal 31 is connected to the positive electrode current collector foil 24. The negative electrode tab terminal 32 is connected to the negative electrode current collector foil 25. The positive electrode tab terminal 31 and the negative electrode tab terminal 32 have a band shape. Referring to FIG. 3, the positive electrode tab terminal 31 includes a body portion 31A made of a conductive material, and a protective layer 31B made of resin disposed to cover the surface of the body portion 31A. The negative electrode tab terminal 32 includes a body portion 32A made of a conductive material, and a protective layer 32B made of resin disposed to cover the surface of the body portion 32A. For the conductive material constituting the body portions 31A and 32A, aluminum (Al), nickel (Ni), or other metal can be adopted.

A description will now be made of the structure of the exterior films 10 in the present embodiment. Referring to FIG. 4, an exterior film 10 has a structure in which a metal layer is sandwiched between a pair of resin layers. More specifically, the exterior film 10 includes a first resin layer 105 that constitutes the inner surface 10A, a metal layer 101 laminated on a main surface of the first resin layer 105 opposite to the inner surface 10A, and a second resin layer 102 laminated on a main surface of the metal layer 101 opposite to the first resin layer 105. The second resin layer 102 constitutes the outer surface 10B. The first resin layer 105 includes a first layer 103 having a first melting point, and a second layer 104 having a second melting point lower than the first melting point and constituting the inner surface 10A.

The resin constituting the second resin layer 102 is, for example, polyester (e.g., PET). The metal constituting the metal layer 101 is Al, for example. The resin constituting the first layer 103 is polypropylene (PP), for example. The resin constituting the second layer 104 is a low melting point thermoplastic resin that has a lower melting point than the resin constituting the first layer 103. Specifically, for the resin constituting the second layer 104, a resin having a melting point of about 70°C or higher and about 130°C or lower is preferably adopted, and a polyolefin elastomer, for example, can be adopted.

The inner surface 10A of at least one of the pair of exterior films 10 has a plurality of projections 109 arranged thereon apart from each other. The plurality of projections 109 may be formed on the respective inner surfaces 10A of the pair of exterior films 10 (on both inner surfaces 10A of the pair of exterior films 10). In the present embodiment, dot-shaped projections 109 are dispersed on the inner surface 10A. The projections 109 may be arranged regularly or dispersed randomly. The second layer 104 can be formed by coating the first layer 103 with a low melting point thermoplastic resin, for example. The projections 109 may be formed, for example, by mixing a dispersion material having a different melting point, molecular weight, composition, or the like into the low melting point thermoplastic resin, by creating inhomogeneity within the low melting point thermoplastic resin, or by using a mold or the like during the formation of the second layer 104. The size of the planar shape of a projection 109 (diameter of the smallest circle enclosing the projection 109) viewed in a direction perpendicular to the inner surface 10A can be measured using, for example, a scanning electron microscope, a laser microscope, a three-dimensional shape measuring machine, or the like, and it may be, for example, 40 µm or more and 500 µm or less. The height of a projection 109 can be measured using, for example, a scanning electron microscope, a laser microscope, a three-dimensional shape measuring machine, or the like, and it may be, for example, 20 µm or more and 180 µm or less.

In the lithium ion secondary battery of the present embodiment, the plurality of projections 109 secure a path for air to pass through when the pair of exterior films 10 are bonded together. This suppresses air bubbles remaining in between the regions of the exterior films 10 to be bonded together. As a result, the lithium ion secondary battery of the present embodiment is a lithium ion secondary battery that is improved in reliability by suppressing remaining of air bubbles in the exterior films 10.

In the lithium ion secondary battery of the present embodiment, the first resin layer 105 includes the second layer 104 made of a low melting point thermoplastic resin. This makes it easy to ensure high airtightness when bonding the pair of exterior films 10 together by thermal bonding. The second layer 104 may be formed over the entire area of the inner surface 10A of the exterior film 10 except for the region corresponding to the fourth outer edge 14. In the case where a process of heat-sealing the first, second, and third outer edges 11, 12, and 13 of the exterior films 10, with the battery body 20 and the positive and negative electrode tab terminals 31 and 32 sandwiched therebetween, introducing the electrolytic solution 26 into the internal space 10C, and then heat-sealing the fourth outer edges 14 is to be adopted, the above configuration makes it easy to avoid unintentional fusion of the fourth outer edges 14 during the heat-sealing of the first, second, and third outer edges 11, 12, and 13.

In the lithium ion secondary battery of the present embodiment, the plurality of projections 109 are preferably arranged at least in the region adjacent to the positive electrode tab terminal 31 and the region adjacent to the negative electrode tab terminal 32. Even in the case where the width of the regions of the first outer edges 11 being bonded together is increased as compared to the second, third, and fourth outer edges 12, 13, and 14 for the purpose of suppressing reduction in airtightness in the regions adjacent to the positive and negative tab terminals 31 and 32, the above configuration suppresses remaining of air bubbles at the first outer edges 11. The plurality of proj ections 109 may be formed over the entire area of the second layer 104.

### (Embodiment 2)

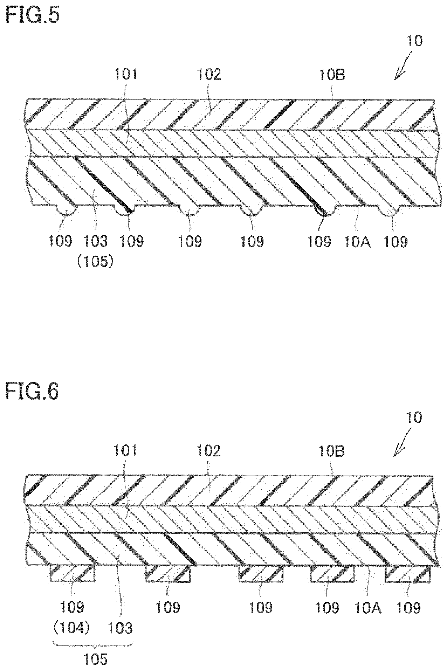

A description will now be made of another embodiment, Embodiment 2. FIG. 5 is a schematic cross-sectional view showing the structure of an exterior film 10 in a lithium ion secondary battery 1 in Embodiment 2. The lithium ion secondary battery of Embodiment 2 basically has a similar configuration and exerts similar effects as that of Embodiment 1. However, referring to FIGS. 5 and 4, the exterior films 10 constituting the lithium ion secondary battery of Embodiment 2 differ from those of Embodiment 1 in that the first resin layer 105 does not include the second layer 104.

As explained in Embodiment 1, in the case where bonding of the exterior films 10 is accomplished by thermocompression bonding, the presence of the second layer 104 facilitates securing high airtightness. However, even in the absence of the second layer 104, the plurality of projections 109 being arranged on the inner surface 10A, which is the surface of the first resin layer 105 (first layer 103), of at least one of the pair of exterior films 10 are able to suppress remaining of air bubbles.

### (Embodiment 3)

A description will now be made of yet another embodiment, Embodiment 3. FIG. 6 is a schematic cross-sectional view showing the structure of an exterior film 10 of a lithium ion secondary battery 1 in Embodiment 3. The lithium ion secondary battery of Embodiment 3 basically has a similar configuration and exerts similar effects as that of Embodiment 1. However, referring to FIGS. 6 and 4, the exterior films 10 constituting the lithium ion secondary battery of Embodiment 3 differ from those of Embodiment 1 in terms of the shape of the projections 109 and the like.

Specifically, the proj ections 109 of Embodiment 3 are a plurality of second layers 104 arranged side by side in stripes. That is, while the projections 109 in Embodiment 1 were formed on the surface of the second layer 104, in Embodiment 3, the linear (bandshaped) second layers 104 themselves, arranged side by side on the surface of the first layer 103, serve as the projections 109. Even in the case of adopting such a structure, the plurality of projections 109 (second layers 104) being arranged on the inner surface 10A, which is the surface of the first resin layer 105 (first layer 103), are able to suppress remaining of air bubbles.

The plurality of second layers 104 arranged side by side in stripes as described above can be formed, for example, by using a mask having stripe-shaped openings when coating the surface of the first layer 103 with the second layer 104.

The form of the second layers 104 (projections 109) is not limited to stripes. The second layers 104 (projections 109) having a planar shape (as viewed in a direction perpendicular to the inner surface 10A) of circular, oval, polygonal, or other shape may be arranged in a matrix, for example.

While the case of using, for the positive electrode layer 22, a plate-shaped sintered body of lithium complex oxide containing no binder was described in the above embodiments, the positive electrode layer 22 is not limited thereto. For example, a coated electrode formed with a positive electrode active material (material: LiCoO₂ or the like), a binder, and a conductive agent can be used for the positive electrode layer 22. Further, while the case of using a resin film as the separator film 21 was described, the separator film 21 is not limited thereto. For example, a film made of ceramic selected from MgO, Al₂O₃, ZrO₂, SiC, Si₃N₄, AlN, and cordierite can be used as the separator film 21. Furthermore, while the case of using, for the negative electrode layer 23, the one containing carbon as the negative electrode active material and the binder was described, the negative electrode layer 23 is not limited thereto. For example, a titanium-containing sintered body that contains lithium titanate Li₄Ti₅O₁₂ (hereinafter, referred to as LTO) or niobiumtitanium complex oxide Nb₂TiO₇ can be used for the negative electrode layer 23.

### EXAMPLES

Experiments were conducted to investigate the effects of varying the size of the planar shape of the projections and the height of the projections on the state of remaining air bubbles and sealing properties. The experimental procedure was as follows.

Samples were produced which had a similar structure as Embodiment 1 above, with the size of the planar shape of the projections and the height of the projections varied. Specifically, first, as the metal layer 101, second resin layer 102, and first layer 103 of the exterior film 10, an Al laminate was prepared (see FIG. 4). In the present experiments, SPALF (registered trademark) manufactured by Showa Denko K.K. was used as the Al laminate.

The polypropylene layer of the Al laminate, corresponding to the first layer 103, was coated with a thermoplastic resin solution to have a thickness after drying of about 20 µm to form the second layer 104. In the present experiments, HARDLEN (registered trademark) manufactured by Toyobo Co., Ltd. was used as the thermoplastic resin solution. For the way of coating, gravure coating was adopted. On a surface of the second layer 104, dot-shaped projections 109 of a desired size and height were formed to obtain the exterior film 10. The projections 109 had a circular planar shape. The projections 109 were formed using a gravure roll that is capable of printing dot-shaped projections 109 of a desired size (diameter) and height. A plurality of types of gravure rolls with different shapes of dots on the surface were used to prepare a plurality of types of exterior films 10 with projections 109 of different sizes and heights. These exterior films 10 were used to produce samples of the lithium ion secondary battery 1 with a similar structure as Embodiment 1 (Examples). For comparison, an exterior film 10 with the formation of projections 109 omitted was used to produce a sample of the lithium ion secondary battery 1 with a similar structure as Embodiment 1 (Comparative Example).

The experiments were then conducted on each sample to examine the state of remaining air bubbles and sealing strength at the outer edges 11 to 14. The state of remaining air bubbles was confirmed by visually observing the outer edges 11 to 14. The sealing strength was confirmed by conducting a peel test on the outer edges 11 to 14. For the peel test, the T-peel test according to ISO 11339 was performed on the outer edges 11 to 14. The peel speed was 300 mm/min. The size and height of the projections of each sample and the experimental results are shown in Table 1.

**[Table 1]**

| Sample No. | Height of Projections (µm) | Size of Projections (µm) | Remaining Air Bubbles | Sealing Strength |
|---|---|---|---|---|
| 1 | 17 | 17 | B | A |
| 2 | 15 | 30 | B | A |
| 3 | 28 | 50 | A | A |
| 4 | 33 | 60 | A | A |
| 5 | 100 | 100 | A | A |
| 6 | 150 | 230 | A | A |
| 7 | 160 | 450 | A | A |
| 8 | 200 | 550 | A | B |
| 9 | - | - | C | C |

In Table 1, the existence of air bubbles was evaluated as: A when no air bubbles were confirmed, B when a few air bubbles were confirmed, and C when remaining air bubbles were clearly confirmed. The sealing strength was examined at several locations on the outer edges 11 to 14, and the results were evaluated as: A when sufficient strength was obtained at all locations, B when reduction in strength was observed at some locations, and C when reduction in strength was observed at more locations.

Referring to Table 1, although Samples 1 and 2 with the height of projections 109 of less than 20 µm are superior to Sample 9 with no projections 109 from the standpoint of remaining air bubbles and sealing strength, they are considered to be inferior in reliability as compared to Samples 3 to 7 where no remaining air bubbles were confirmed. On the other hand, although Sample 8 with the height of projections 109 exceeding 180 µm is superior to Sample 9 with no projections 109 from the standpoint of remaining air bubbles and sealing strength, it is inferior in sealing strength as compared to Samples 3 to 7. It can thus be said that the preferable height of the projections 109 is 20 µm or more and 180 µm or less.

Although Samples 1 and 2 with the size (diameter) of projections 109 of less than 40 µm are superior to Sample 9 with no projections 109 from the standpoint of remaining air bubbles and sealing strength, they are considered to be inferior in reliability as compared to Samples 3 to 7 where no remaining air bubbles were confirmed. On the other hand, although Sample 8 with the size of projections 109 exceeding 500 µm is superior to Sample 9 with no projections 109 from the standpoint of remaining air bubbles and sealing strength, it is inferior in sealing strength as compared to Samples 3 to 7. It can thus be said that the preferable size of the projections 109 is 40 µm or more and 500 µm or less.

It should be understood that the embodiments and examples disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

1: lithium ion secondary battery; 10: exterior film; 10A: inner surface; 10B: outer surface; 10C: internal space; 11: first outer edge; 12: second outer edge; 13: third outer edge; 14: fourth outer edge; 20: battery body; 21: separator film; 21A: first main surface; 21B: second main surface; 22: positive electrode layer; 23: negative electrode layer; 24: positive electrode current collector foil; 25: negative electrode current collector foil; 26: electrolytic solution; 31: positive electrode tab terminal; 31A: body portion; 31B: protective layer; 32: negative electrode tab terminal; 32A: body portion; 32B: protective layer; 101: metal layer; 102: second resin layer; 103: first layer; 104: second layer; 105: first resin layer; and 109: projection.

## Claims

1. A lithium ion secondary battery comprising:
a pair of exterior films having outer edges bonded together in a stacked state to form an internal space;
a battery body housed in the internal space;
a positive electrode tab terminal connected to the battery body in between the pair of exterior films and extending to an outside; and
a negative electrode tab terminal connected to the battery body in between the pair of exterior films and extending to the outside;
the battery body including
a separator film,
a lithium-containing positive electrode layer laminated on a first main surface of the separator film,
a negative electrode layer laminated on a second main surface of the separator film located on an opposite side from the first main surface in a thickness direction,
a positive electrode current collector foil laminated on an opposite side of the positive electrode layer from the separator film,
a negative electrode current collector foil laminated on an opposite side of the negative electrode layer from the separator film, and
an electrolytic solution impregnated into the separator film, the positive electrode layer, and the negative electrode layer,
the pair of exterior films each including a first resin layer constituting an inner surface, the inner surfaces opposing each other,
the inner surface of at least one of the pair of exterior films having a plurality of projections arranged thereon apart from each other.

2. The lithium ion secondary battery according to claim 1, wherein the plurality of projections are arranged in a region adjacent to the positive electrode tab terminal and a region adjacent to the negative electrode tab terminal.

3. The lithium ion secondary battery according to claim 1 or 2, wherein the first resin layer includes
a first layer having a first melting point, and
a second layer having a second melting point lower than the first melting point, the second layer constituting the inner surface.

4. The lithium ion secondary battery according to any one of claims 1 to 3, wherein each of the pair of exterior films further includes
a metal layer laminated on a main surface of the first resin layer opposite to the inner surface, and
a second resin layer laminated on a main surface of the metal layer opposite to the first resin layer.
